# EUROPÄISCHE PATENTSCHRIFT

(11) **EP 3 198 738 B1**
(45) Veröffentlichungstag und Bekanntmachung des Hinweises auf die Patenterteilung: **07.06.2023**
(21) Anmeldenummer: 15756840.3
(22) Anmeldetag: 26.08.2015
(51) Int. Cl.: H04B 3/00, H04B 3/30, H04L 25/02

(54) **ANORDNUNG ZUR DATENÜBERTRAGUNG ÜBER EINEN DATENBUS UND VERFAHREN ZUR DATENÜBERTRAGUNG BEI EINER ANORDNUNG ZUR DATENÜBERTRAGUNG ÜBER EINEN DATENBUS**
ARRANGEMENT FOR DATA TRANSMISSION VIA A DATA BUS AND METHOD FOR DATA TRANSMISSION IN AN ARRANGEMENT FOR DATA TRANSMISSION VIA A DATA BUS
DISPOSITIF DE TRANSMISSION DE DONNÉES SUR BUS DE DONNÉES ET PROCÉDÉ DE TRANSMISSION DE DONNÉES DANS UN DISPOSITIF DE TRANSMISSION DE DONNÉES SUR BUS DE DONNÉES

(30) Priorität: 22.09.2014 DE 102014013731
(43) Veröffentlichungstag der Anmeldung: 02.08.2017
(73) Patentinhaber: SEW-EURODRIVE GmbH & Co. KG, 76646 Bruchsal (DE)
(72) Erfinder: SIMON, Olaf, 76646 Bruchsal, Untergrombach (DE); HOFFMANN, Julian, 67729 Sippersfeld (DE); MEYROWITZ, Gunnar, 26123 Oldenburg (DE); SCHAAF, Christian, 76661 Philippsburg (DE); ENDERLE, Christian, 76356 Weingarten (DE)
(86) Internationale Anmeldenummer: PCT/EP2015/001734
(87) Internationale Veröffentlichungsnummer: WO 2016/045766

(56) Entgegenhaltungen:
- US-A1- 2004 135 646
- US-A1- 2013 069 740

## Beschreibung

Die Erfindung betrifft eine Anordnung zur Datenübertragung über einen Datenbus und ein Verfahren zur Datenübertragung bei einer Anordnung zur Datenübertragung über einen Datenbus.

Es ist allgemein bekannt, dass Daten im Manchestercode gleichspannungsfrei übertragbar sind.

**Aus der** DE 39 41 531 A1 **ist eine Bustreiberschaltung bekannt.**

**Aus der** US 5 486 777 A **ist ein differentieller Empfänger bekannt.**

**Aus der** US 5 783 955 A **ist eine Treiberschaltung für ein lokales Netzwerk bekannt.**

**Aus der** DE 10 2008 021 012 A1 **ist eine Datenübertragungseinrichtung bekannt.**

**Aus der** US 2013 / 069 740 A1 **ist als nächstliegender Stand der Technik ein Kommunikationsnetzwerk bekannt.**

**Aus der** US 2004 /135 646 A1 **ist ein Schaltkreis zur Anpassung charakteristischer Wellenimpedanz bekannt.**

Der Erfindung liegt daher die Aufgabe zugrunde, die Sicherheit bei der Datenübertragung zu verbessern.

Erfindungsgemäß wird die Aufgabe bei der Anordnung zur Datenübertragung über einen Datenbus nach den in Anspruch 1 und bei dem Verfahren zur Datenübertragung bei einer Anordnung zur Datenübertragung über einen Datenbus nach den in Anspruch 7 angegebenen Merkmalen gelöst.

Wichtige Merkmale der Erfindung bei der Anordnung zur Datenübertragung über einen Datenbus sind, dass für über die Datenbusleitungen gesendete Signale ein Wellenwiderstand, also Leitungswellenwiderstand, wirksam ist,
wobei die jeweilige Datenbusleitung über einen Widerstand, insbesondere BIAS-Widerstand, mit einem Potential einer Versorgungsspannung verbunden ist, dessen Widerstandsbetrag mindestens zwanzigmal größer ist als der Wellenwiderstandsbetrag,
wobei als Terminierungsschaltung zwischen den Datenbusleitungen zumindest ein Widerstand, dessen Widerstandsbetrag dem Wellenwiderstandsbetrag gleicht, und eine Kapazität in Reihe angeordnet sind.

Von Vorteil ist dabei, dass Gleichtaktstörungen vermindert werden, eine IDLE-Spannung in der zwischen den Zeiten der Übertragung von Datenpaketen liegenden Zeitspanne aufgebaut wird und der Datenbus mit einem dem Wellenwiderstand entsprechenden Widerstand abgeschlossen ist.

Bei einer vorteilhaften Ausgestaltung ist zwischen den Anschlusspolen der Terminierungsschaltung und der jeweiligen Datenbusleitung eine jeweilige Induktivität einer Gleichtaktleitungsimpedanz angeordnet,

insbesondere wobei die Induktivitäten einen gemeinsamen Spulenkern aufweisen,

insbesondere wobei zwischen einem ersten Anschlusspol der Terminierungsschaltung und einer ersten Datenbusleitung eine erste Induktivität der Gleichtaktleitungsimpedanz angeordnet ist und wobei zwischen einem zweiten Anschlusspol der Terminierungsschaltung und einer zweiten Datenbusleitung eine zweite Induktivität der Gleichtaktleitungsimpedanz angeordnet ist. Von Vorteil ist dabei, dass hochfrequente Störungen vermindert werden. Vorzugsweise werden sie sogar gehindert, zur Terminierungsschaltung vorzudringen.

Bei einer vorteilhaften Ausgestaltung sind die beiden Datenbusleitungen über einen Widerstand miteinander verbunden, dessen Widerstandsbetrag mindestens zwanzigmal größer ist als der Wellenwiderstandsbetrag. Von Vorteil ist dabei, dass die Ausgangsschalter der Transceiver der Datenbusteilnehmer nicht überlastet werden.

Bei einer vorteilhaften Ausgestaltung sind als Terminierungsschaltung zwischen den Datenbusleitungen zwei in Reihe geschalte Reihenschaltungen angeordnet, die jeweils einen Widerstand, dessen Widerstandsbetrag dem halben Wellenwiderstandsbetrag gleicht, und eine Kapazität aufweisen,
wobei die Verbindungsstelle der beiden Reihenschaltungen mit Masse verbunden ist. Von Vorteil ist dabei, dass ein Ableiten der Gleichtaktstörung gegen Masse verbessert ist.

Bei einer vorteilhaften Ausgestaltung ist die jeweilige Kapazität derart groß, dass die Zeitkonstante der jeweiligen Reihenschaltung der Datenübertragungsfrequenz entspricht. Von Vorteil ist dabei, dass höher frequente Störungen unterdrückt werden.

Bei einer vorteilhaften Ausgestaltung ist der Wellenwiderstandsbetrag 120 Ohm. Von Vorteil ist dabei, dass als BIAS Widerstände wenige Kiloohm genügen und als Ausgangsschalter des Transceivers Schalter mit geringer Leistung verwendbar sind.

Bei einer vorteilhaften Ausgestaltung ist die Terminierungsschaltung mit den Anschlüssen eines Transceivers verbunden,
insbesondere wobei der Transceiver bei Datenübertragung niederohmig ist und bei Nicht-Datenübertragung hochohmig ist. Von Vorteil ist dabei, dass ein schneller Aufbau oder Abbau der IDLE-Spannung ermöglicht ist.

Wichtige Merkmale bei dem Verfahren zur Datenübertragung bei einer vorgenannten Anordnung sind, dass die Datenübertragung durch das Übermitteln von zeitlich voneinander beabstandeten Datenpaketen auf den Datenbusleitungen ausgeführt wird,
wobei das Datenpaket gleichspannungsfrei und/oder takttragend übertragen wird, insbesondere im Manchestercode, insbesondere im differentiellen Manchestercode,
wobei vor jedem Datenpaket ein Startbit und/oder nach jedem Datenpaket ein Stoppbit übertragen wird,
wobei das Startbit und/oder das Stoppbit jeweils länger als eine Periodenlänge des bei der Datenübertragung verwendeten Taktsignals vorgegeben werden, insbesondere länger als drei Periodenlängen des bei der Datenübertragung verwendeten Taktsignals.

Von Vorteil ist dabei, dass der Aufbau beziehungsweise der Abbau der IDLE-Spannung schnell ausführbar ist und somit ein verbesserter Schutz gegen Störungen bewirkbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Datenübertragungssystem gezeigt, bei dem ein Transceiver 1 mit einem Datenbus, insbesondere mit Datenbusleitungen 2 des Datenbusses, über Induktivitäten L₁ und L₂ verbunden ist, wobei eine Terminierungsschaltung vorgesehen ist.
In der Figur 2 ist eine alternative Terminierungsschaltung vorgesehen.
In der Figur 3 ist eine weitere erfindungsgemäße Terminierungsschaltung vorgesehen.

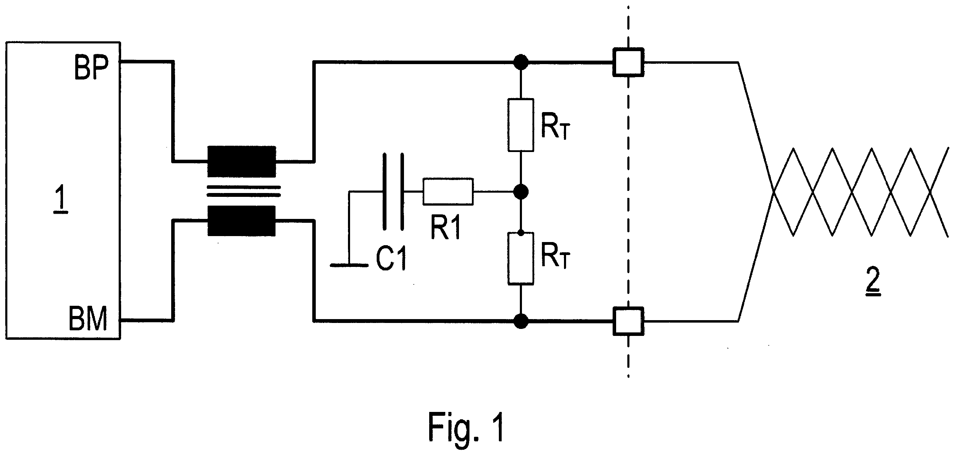

Wie in Figur 1 dargestellt, weist der Datenbus eine erste und eine zweite Leitung auf, wobei ein erster Anschluss BP des Transceivers mit der ersten Leitung und der zweite Anschluss BM des Transceivers mit der zweiten Leitung verbunden ist, wobei jeweils eine Induktivität (L1, L2) zwischengeordnet ist.

Auf diese Weise ist die Übertragung von Daten in Form differentieller Signale ermöglicht. Hierbei tritt auf dem Datenbus ein Wellenwiderstand von beispielsweise 120 Ohm, auf.

Die beiden Induktivitäten (L1, L2) werden durch eine Gleichtaktleitungsimpedanz realisiert, wobei hierzu die Induktivitäten (L1, L2) zumindest einen gemeinsamen Spulenkern aufweisen, um welchen ihre jeweilige, insbesondere die jeweilige Induktivität erzeugende Wicklung gewickelt ist. Somit unterdrückt die so gebildete Drosselanordnung im Wesentlichen nur Gleichtaktstörungen - nicht aber differentielle Störungen.

Zur Leitungsseite hin ist somit ein korrekter Wellenabschluss möglich. Hierzu ist zwischen der ersten und der zweiten Leitung eine Reihenschaltung von zwei Widerständen R_{T} angeordnete, wobei der Mittelabgriff der Reihenschaltung über einen Tiefpass mit Masse verbunden ist.

Dabei entspricht der Widerstand R_{T} im Wesentlichen dem Wellenwiderstand des Datenbusses. Im Ausführungsbeispiel beträgt der Widerstand R_{T} also 120 Ohm.

Hierbei ist der Tiefpass aus einer Reihenschaltung einer Kapazität C1 und einem Widerstand R1, zusammengesetzt, wobei der Widerstand R1 viel kleiner ist als der Widerstand R_{T}. insbesondere mindestens zehnmal kleiner.

Wie in Figur 1 gezeigt, sind die Datenbusleitungen 2 mit dem Wellenwiderstand abgeschlossen. Somit sind Störungen bestmöglich unterdrückt. Darüber hinaus werden Gleichtaktstörungen vermindert, da das obere Potential der Gleichtaktstörung über die Kapazität C1 nach Masse abgeleitet wird und das untere Potential ebenfalls.

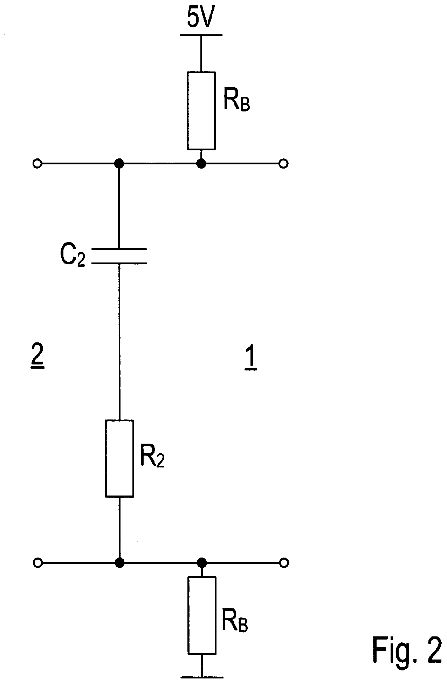

Wie in Figur 2 gezeigt, ist die Terminierung alternativ derart ausgeführt, dass zwischen der ersten Datenbusleitung und der zweiten Datenbusleitung eine Reihenschaltung aus einer Kapazität C2 und dem Abschlusswiderstand R2 angeordnet wird, wobei der Abschlusswiderstand R2 dem Wellenwiderstand des Datenbusses entspricht. Außerdem ist die erste Datenbusleitung über einen BIAS-Widerstand mit einem oberen Versorgungspotential verbunden und die zweite Datenbusleitung über einen BIAS-Widerstand R_{B} mit einem unteren Versorgungspotential verbunden.

Die BIAS-Widerstände R_{B} sind mindestens zwanzigmal größer als der Wellenwiderstand des Datenbusses.

Somit werden die Datenbusleitungen nach Beendigung der Übertragung eines Datenpakets, also bei hochohmigem Zustand der Anschlüsse des Transceivers und der weiteren Busteilnehmer, auf die entsprechenden Potentiale gezogen, so dass sich eine IDLE-Spannung, also eine Gleichspannung, auf dem Datenbus aufbaut. Wenn danach wieder ein Datenpaket übertragen wird, also die Anschlüsse des Transceivers oder eines weiteren Busteilnehmers niederohmig werden, wird die IDLE-Spannung abgebaut. Der Abschlusswiderstand R2 ist für die Datenübertragung wirksam, da die Kapazität C2 für das zugehörige Wechselspannungssignal nur einen vernachlässigbaren Widerstand darstellt.

Allerdings werden Gleichtaktstörungen nicht unterdrückt.

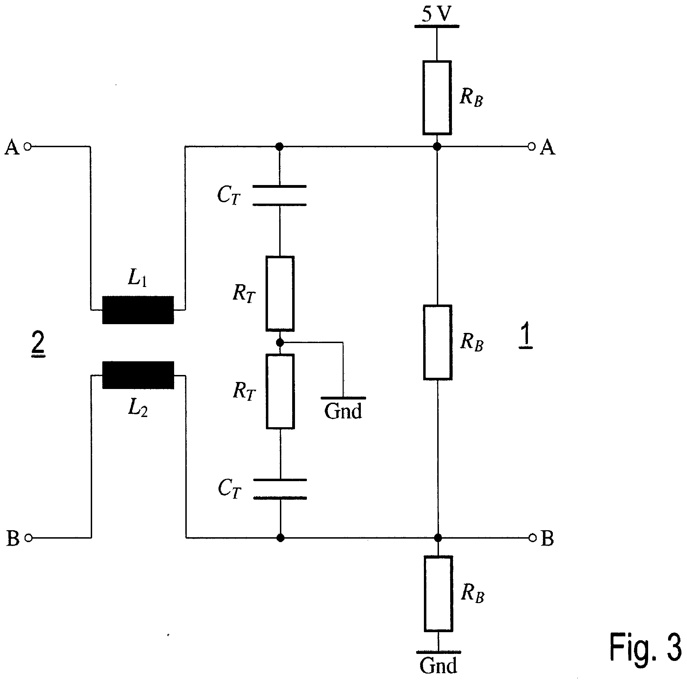

Wie in Figur 3 gezeigt, ist die dortige Terminierung durch eine Serienschaltung zweier Reihenschaltungen ausgeführt, wobei der Verbindungsknoten mit Masse verbunden ist, also ein festgelegtes Potential aufweist.

Jede der beiden Reihenschaltungen weist eine Kapazität C_{T} und einen Widerstand R_{T} auf. Der Widerstand R_{T} entspricht jeweils dem halben Wellenwiderstand, insbesondere beträgt der Widerstand R_{T} also im Beispiel 60 Ohm. Darüber hinaus sind wiederum die beiden BIAS widerstände R_{B} vorgesehen, welche die jeweilige Datenbusleitung mit dem jeweiligen Versorgungspotential verbinden. Eines der Versorgungspotentiale ist dabei entweder eine negative Spannung oder das Massepotential selbst. Das andere Versorgungspotential bildet eine positive Spannung gegen Masse.

Zwischen den beiden Datenbusleitungen, also parallel zur oben beschriebenen Terminierungsschaltung, ist außerdem ein weiterer widerstand R_{B} angeordnet, der vorzugsweise denselben Wert aufweist wie die BIAS-Widerstände. Auf jeden Fall ist dieser Widerstand R_{B} aber ebenfalls mindestens zwanzigmal größer ist als der Wellenwiderstand. Somit wird die IDLE-Spannung durch den aus diesem Widerstand R_{B} und den BIAS-Widerständen R_{B} gebildeten Spannungsteiler bestimmt und ist kleiner als bei Nichtvorhandensein des zwischen den Datenbusleitungen angeordneten Widerstandes R_{B}.

Gleichtaktstörungen werden abgebaut, da aus jeder Datenbusleitung ein Ableiten gegen Masse über den jeweiligen Widerstand R_{T} möglich ist.

Durch die genannte Verringerung der IDLE-Spannung ist ein schnelleres Aufladen oder Entladen der Kapazitäten C_{T} ermöglicht.

Wenn also die Datenübertragung beendet wird und somit die Anschlüsse des Transceivers 1 und der anderen Busteilnehmer hochohmig werden, werden die Kapazitäten C_{T} über die BIAS-Widerstände RB aufgeladen, so dass die volle IDLE-Spannung zum Schutz gegen Störsignale erst nach Aufladung zur Verfügung steht. Die Zeitdauer zum Aufladen ist also wichtig beim Schutz gegen Störungen.

Wenn eine volle IDLE-Spannung aufgebaut ist und die Datenübertragung gestartet wird und somit die Anschlüsse des Transceivers 1 oder eines anderen Busteilnehmer niederohmig werden, werden die Kapazitäten C_{T} entladen, wobei die Zeitdauer zur Entladung durch die durch den Spannungsteiler reduzierte IDLE-Spannung vermindert ist.

Vorzugsweise wird für die Übertragung der Daten die Manchestercodierung eingesetzt, also eine über die Dauer des Datenpakets gemittelt gleichspannungsfreie Codierung.

Beim Beginn eines jeden Datenpakets wird ein definiertes Startbit und beim Ende ein definiertes Stoppbit gesendet. Somit ist die manchestercodierte Information eindeutig decodierbar.

Erfindungsgemäß wird das Startbit und/oder das Stoppbit zeitlich verlängert ausgeführt, also länger als die Taktzeit T_{C}, insbesondere sogar für drei Taktzeiten T_{C} oder mehr als drei Taktzeiten Tc.

Auf diese Weise liegt während der Zeitdauer des Startbits beziehungsweise des Stoppbits eine Gleichspannung zwischen den Datenbusleitungen an, so dass ein sehr schnelles Aufladen oder Entladen der Kapazitäten C_{T} ausführbar ist.

Während des Anliegens des Startbits wird somit ein Entladen der Kapazitäten C_{T} ausgeführt, so dass die zuvor anliegende IDLE-Spannung abgebaut wird.

Während des Anliegens des Stoppbits wird ein Aufladen der Kapazitäten C_{T} ausgeführt, so dass die danach die vorgesehene IDLE-Spannung aufgebaut ist.

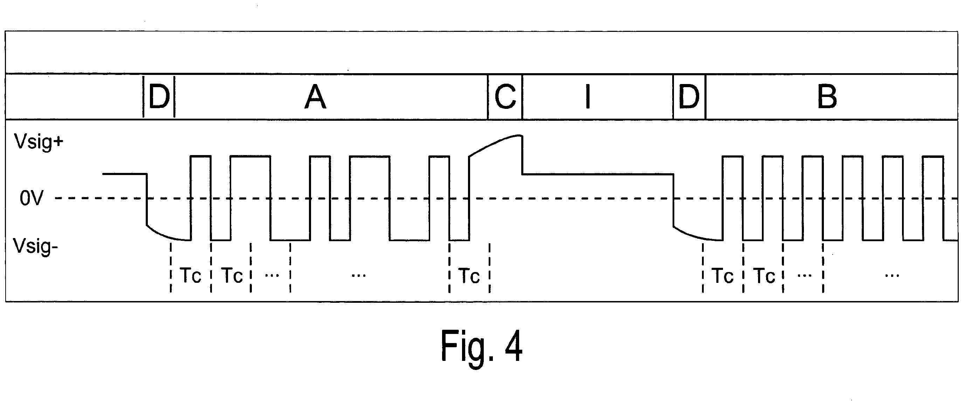

In Figur 4 ist das zugehörige Verfahren zur gezielten Auf- und Entladung des in Figur 2 gezeigten Kapazität C₂ bzw in Figur 3 gezeigten Kapazität C_{T} dargestellt:
Dabei ist die Übertragung zweier voneinander beabstandeter Datenpakete mit Abszisse als Zeit dargestellt.

Im Zeitabschnitt (**A)** und (**B)** werden - wie oben beschrieben - Daten von zwei unterschiedlichen Teilnehmern, die jeweils einen Transceiver 1 aufweisen, mithilfe eines gleichspannungsfreien Leitungscodes übertragen. Im Idealfall ergibt das Integral der Spannungs-Zeit-Fläche des Spannungsverlaufs auf der Signalleitung Null.

Der Übertragungswechsel zwischen den Teilnehmern erfolgt über den IDLE-Zustand (I) in dem beide Transceiver inaktiv, also hochohmig, sind. Während des IDLE-Zustands (I) wird durch die Bias-Widerstände R_{B} eine IDLE-Spannung aufrechterhalten. Nach Abschluss einer gleichspannungsfreien Übertragung ist die Kapazität C₂ beziehungsweise C_{T} entladen.

Um ein schnelleres Laden der Kapazität C₂ beziehungsweise C_{T} und somit direktes Erreichen der IDLE Spannung zu erwirken erfolgt der Übergang in den IDLE-Zustand (**I)** über einen Zwischenzustand (**C)**. Dieser zeichnet sich dadurch aus, dass der Sender nach Abschluss der Datenübertragung für einen definierten Zeitraum, welcher sich aus der Zeitkonstante des zu ladenden RC-Gliedes bestimmen lässt, aktiv den positiven Pegel treibt. Erfindungsgemäß ist diese Zeitkonstante größer aus als eine Taktzeit Tc in der verwendeten Datenübertragung.

Entsprechend erfolgt das Entladen des Kondensators C2 beim Übergang von (**I)** in (**A)** oder (**B)** durch einen Zwischenzustand (**D)**. Dieser zeichnet sich dadurch aus, dass der Sender vor Beginn der Datenübertragung aktiv den negativen Pegel treibt.

Bei einem weiteren erfindungsgemäßen Ausführungsbeispiel wird auf den Zwischenzustand (**D)** verzichtet, wobei verringerte Signalpegel zu Beginn der Datenübertragung in Kauf genommen werden. Vorzugswiese wird hierbei die IDLE-Spannung durch einen zentralen Bias-Widerstand R_{B} zwischen den Datenbusleitungen begrenzt.

Wie in Figur 3 gezeigt, ist die Gleichtaktleitungsimpedanz, also die Induktivitäten (L₁, L₂), zwischen der Terminierung und den Datenbusleitungen angeordnet. Auf diese Weise ist eine noch weiter verbesserte Verminderung von Störungen erreichbar.

### Bezugszeichenliste

1 Transceiver
2 Datenbusleitungen
L₁ Induktivität der dem oberen Potential zugeordneten Leitung
L₂ Induktivität der dem unteren Potential zugeordneten Leitung
C_{T} Kapazität
C₁ Kapazität
C₂ Kapazität
R_{B} Widerstand, insbesondere BIAS-Widerstand
R₁ Widerstand
R_{T} Widerstand
R₂ Widerstand
BM Anschluss
BP Anschluss
GND Massepotential
T_{C} Taktzeit

## Patentansprüche

1. Anordnung zur Datenübertragung über einen Datenbus,
wobei für über die Datenbusleitungen gesendete Signale ein Wellenwiderstand wirksam ist,
wobei die jeweilige Datenbusleitung über einen Widerstand (R_{B}) insbesondere BIAS-Widerstand, mit
einem Potential einer Versorgungsspannung verbunden ist, dessen Widerstandsbetrag mindestens zwanzigmal größer ist als der Wellenwiderstandsbetrag,
wobei als Terminierungsschaltung zwischen den Datenbusleitungen zumindest ein Widerstand (R_{T}) dessen Widerstandsbetrag dem Wellenwiderstandsbetrag gleicht, und eine Kapazität (C_{T}) in Reihe angeordnet sind,
**wobei zwischen den Anschlusspolen der Terminierungsschaltung und der jeweiligen Datenbusleitung eine jeweilige Induktivität (L₁,L₂) einer Gleichtaktleitungsimpedanz angeordnet ist,**
**wobei die Induktivitäten einen gemeinsamen Spulenkern aufweisen,**
**wobei zwischen einem ersten Anschlusspol der Terminierungsschaltung und einer ersten Datenbusleitung eine erste Induktivität der Gleichtaktleitungsimpedanz angeordnet ist und wobei zwischen einem zweiten Anschlusspol der Terminierungsschaltung und einer zweiten Datenbusleitung eine zweite Induktivität der Gleichtaktleitungsimpedanz angeordnet ist.**

2. Anordnung nach Anspruch 1,
**dadurch gekennzeichnet, dass**
die beiden Datenbusleitungen über einen Widerstand miteinander verbunden sind, dessen Widerstandsbetrag mindestens zwanzigmal größer ist als der Wellenwiderstandsbetrag.

3. Anordnung nach mindestens einem der vorangegangenen Ansprüche,
**dadurch gekennzeichnet, dass**
als Terminierungsschaltung zwischen den Datenbusleitungen zwei in Reihe geschalte Reihenschaltungen angeordnet sind, die jeweils einen Widerstand, dessen Widerstandsbetrag dem halben Wellenwiderstandsbetrag gleicht, und eine Kapazität aufweisen,
wobei die Verbindungsstelle der beiden Reihenschaltungen mit Masse verbunden ist.

4. Anordnung nach mindestens einem der vorangegangenen Ansprüche,
**dadurch gekennzeichnet, dass**
die jeweilige Kapazität derart groß ist, dass die Zeitkonstante der jeweiligen Reihenschaltung der Datenübertragungsfrequenz entspricht.

5. Anordnung nach mindestens einem der vorangegangenen Ansprüche,
**dadurch gekennzeichnet, dass**
der Wellenwiderstandsbetrag 120 Ohm ist.

6. Anordnung nach mindestens einem der vorangegangenen Ansprüche,
**dadurch gekennzeichnet, dass**
die Terminierungsschaltung mit den Anschlüssen eines Transceivers verbunden ist, insbesondere wobei der Transceiver bei Datenübertragung niederohmig ist und bei Nicht-Datenübertragung hochohmig ist.

7. Verfahren zur Datenübertragung **über einen Datenbus** bei einer Anordnung nach mindestens einem der vorangegangenen Ansprüche,
**wobei für über die Datenbusleitungen gesendete Signale ein Wellenwiderstand wirksam wird,**
**wobei die jeweilige Datenbusleitung über einen Widerstand, insbesondere BIAS-Widerstand, mit einem Potential einer Versorgungsspannung verbunden ist, dessen Widerstandsbetrag mindestens zwanzigmal größer ist als der Wellenwiderstandsbetrag,**
**wobei als Terminierungsschaltung zwischen den Datenbusleitungen zumindest ein Widerstand, dessen Widerstandsbetrag dem Wellenwiderstandsbetrag gleicht, und eine Kapazität in Reihe angeordnet sind,**
**wobei zwischen den Anschlusspolen der Terminierungsschaltung und der jeweiligen Datenbusleitung eine jeweilige Induktivität einer Gleichtaktleitungsimpedanz angeordnet ist,**
**wobei die Induktivitäten einen gemeinsamen Spulenkern aufweisen,**
**wobei zwischen einem ersten Anschlusspol der Terminierungsschaltung und einer ersten Datenbusleitung eine erste Induktivität der Gleichtaktleitungsimpedanz angeordnet ist und wobei zwischen einem zweiten Anschlusspol der Terminierungsschaltung und einer zweiten Datenbusleitung eine zweite Induktivität der Gleichtaktleitungsimpedanz angeordnet ist,**
wobei
die Datenübertragung durch das Übermitteln von zeitlich voneinander beabstandeten Datenpaketen auf den Datenbusleitungen ausgeführt wird,
wobei das Datenpaket gleichspannungsfrei und/oder takttragend übertragen wird, insbesondere im Manchestercode, insbesondere im differentiellen Manchestercode,
wobei vor jedem Datenpaket ein Startbit und/oder nach jedem Datenpaket ein Stoppbit übertragen wird,
wobei das Startbit und/oder das Stoppbit jeweils länger als eine Periodenlänge des bei der Datenübertragung verwendeten Taktsignals vorgegeben werden, insbesondere länger als drei Periodenlängen des bei der Datenübertragung verwendeten Taktsignals.

## Claims

1. Arrangement for transmitting data via a data bus,
wherein a characteristic impedance is operative for signals sent via the data bus lines,
wherein each data bus line is connected to a potential of a supply voltage by way of a resistor (R_{B}), in particular a BIAS resistor, the resistance value of which is at least twenty times greater than the characteristic impedance value,
wherein at least a resistor (R_{T}), the resistance value of which is equal to the characteristic impedance value, and a capacitor (C_{T}) are arranged in series between the data bus lines in the form of a termination circuit,
wherein an inductor (L₁, L₂) of a common-mode line impedance is arranged in each case between the terminals of the termination circuit and each data bus line,
wherein the inductors have a shared coil core,
wherein a first inductor of the common-mode line impedance is arranged between a first terminal of the termination circuit and a first data bus line, and wherein a second inductor of the common-mode line impedance is arranged between a second terminal of the termination circuit and a second data bus line.

2. Arrangement according to claim 1,
**characterised in that**
the two data bus lines are interconnected by way of a resistor, the resistance value of which is at least twenty times greater than the characteristic impedance value.

3. Arrangement according to at least one of the preceding claims,
**characterised in that**
two series circuits wired in series are arranged between the data bus lines in the form of a termination circuit, each series circuit having a resistor, the resistance value of which is equal to half the characteristic impedance value, and a capacitor,
wherein the connection point of the two series circuits is connected to earth.

4. Arrangement according to at least one of the preceding claims,
**characterised in that**
each capacitor is dimensioned such that the time constant of each series circuit corresponds to the data transmission frequency.

5. Arrangement according to at least one of the preceding claims,
**characterised in that**
the characteristic impedance value is 120 ohm.

6. Arrangement according to at least one of the preceding claims,
**characterised in that**
the termination circuit is connected to the connection terminals of a transceiver,
in particular wherein the transceiver is low-resistance when data is being transmitted and high-resistance when data is not being transmitted.

7. Method for transmitting data via a data bus in an arrangement according to at least one of the preceding claims,
wherein a characteristic impedance is operative for signals sent via the data bus lines,
wherein each data bus line is connected to a potential of a supply voltage by way of a resistor, in particular a BIAS resistor, the resistance value of which is at least twenty times greater than the characteristic impedance value,
wherein at least a resistor, the resistance value of which is equal to the characteristic impedance value, and a capacitor are arranged in series between the data bus lines in the form of a termination circuit,
wherein an inductor of a common-mode line impedance is arranged in each case between the terminals of the termination circuit and each data bus line,
wherein the inductors have a shared coil core,
wherein a first inductor of the common-mode line impedance is arranged between a first terminal of the termination circuit and a first data bus line, and wherein a second inductor of the common-mode line impedance is arranged between a second terminal of the termination circuit and a second data bus line,
wherein the data is transmitted by transferring time-separated data packets on the data bus lines,
wherein the data packet is transmitted in a DC voltage-free and/or clocked manner, in particular in Manchester code, in particular in differential Manchester code,
wherein a start bit is transmitted before each data packet and/or a stop bit is transmitted after each data packet,
wherein the start bit and/or the stop bit are each pre-set to be longer than one period length of the clock signal used during data transmission, in particular to be longer than three period lengths of the clock signal used during data transmission.

## Revendications

1. Dispositif de transmission de données via un bus de données,
une impédance caractéristique étant active pour les signaux envoyés via les lignes de bus de données,
une ligne de bus de données respective étant reliée via une résistance (R_{B}), en particulier une résistance BIAS, à un potentiel d'une tension d'alimentation dont la valeur de résistance est au moins vingt fois supérieure à la valeur d'impédance caractéristique,
au moins une résistance (R_{T}), dont la valeur de résistance est égale à la valeur d'impédance caractéristique, et une capacité (C_{T}) étant agencées en série pour servir de circuit de terminaison entre les lignes de bus de données,
entre les pôles de connexion du circuit de terminaison et la ligne de bus de données respective étant agencée une inductance respective (L₁,L₂) d'une impédance de ligne de mode commun,
les inductances présentant un noyau de bobine commun,
une première inductance de l'impédance de ligne de mode commun étant agencée entre un premier pôle de connexion du circuit de terminaison et une première ligne de bus de données et une seconde inductance de l'impédance de ligne de mode commun étant agencée entre un second pôle de connexion du circuit de terminaison et une seconde ligne de bus de données.

2. Dispositif selon la revendication 1,
**caractérisé en ce que**
les deux lignes de bus de données sont reliées entre elles par une résistance dont la valeur de résistance est au moins vingt fois supérieure à la valeur d'impédance caractéristique.

3. Dispositif selon au moins l'une quelconque des revendications précédentes,
**caractérisé en ce que**
en tant que circuit de terminaison, deux circuits série montés en série sont disposés entre les lignes de bus de données, chacun présentant une résistance dont la valeur de résistance est égale à la moitié de la valeur d'impédance caractéristique, et une capacité,
la jonction des deux circuits série étant reliée à la masse.

4. Dispositif selon au moins l'une quelconque des revendications précédentes,
**caractérisé en ce que**
la capacité respective est si grande que la constante de temps du circuit série respectif correspond à la fréquence de transmission des données.

5. Dispositif selon au moins l'une quelconque des revendications précédentes,
**caractérisé en ce que**
la valeur d'impédance caractéristique est de 120 ohms.

6. Dispositif selon au moins l'une quelconque des revendications précédentes,
**caractérisé en ce que**
le circuit de terminaison est relié aux bornes d'un émetteur-récepteur,
en particulier, l'émetteur-récepteur est à faible impédance lors de la transmission de données et à haute impédance lorsqu'il ne transmet pas de données.

7. Procédé de transmission de données via un bus de données dans un dispositif selon au moins l'une quelconque des revendications précédentes,
une impédance caractéristique devenant active pour les signaux envoyés via les lignes de bus de données,
une ligne de bus de données respective étant reliée via une résistance, en particulier une résistance BIAS, à un potentiel d'une tension d'alimentation dont la valeur de résistance est au moins vingt fois supérieure à la valeur d'impédance caractéristique, au moins une résistance, dont la valeur de résistance est égale à la valeur d'impédance caractéristique, et une capacité étant agencées en série pour servir de circuit de terminaison entre les lignes de bus de données,
entre les pôles de connexion du circuit de terminaison et la ligne de bus de données respective étant agencée une inductance respective d'une impédance de ligne de mode commun,
les inductances présentant un noyau de bobine commun,
une première inductance de l'impédance de ligne de mode commun étant agencée entre un premier pôle de connexion du circuit de terminaison et une première ligne de bus de données et une seconde inductance de l'impédance de ligne de mode commun étant agencée entre un second pôle de connexion du circuit de terminaison et une seconde ligne de bus de données,
la transmission de données étant effectuée par la transmission de paquets de données espacés dans le temps sur les lignes de bus de données,
le paquet de données étant transmis sans tension continue et/ou avec horloge, en particulier dans le code de Manchester, en particulier dans le code de Manchester différentiel,
un bit de démarrage étant transmis avant chaque paquet de données et/ou un bit d'arrêt étant transmis après chaque paquet de données,
le bit de démarrage et/ou le bit d'arrêt étant respectivement prédéterminés pendant plus d'une longueur de période du signal d'horloge utilisé dans la transmission de données, en particulier pendant plus de trois longueurs de période du signal d'horloge utilisé dans la transmission de données.
